# EUROPEAN PATENT SPECIFICATION

(11) **EP 2 549 505 B1**
(45) Date of publication and mention of the grant of the patent: **01.02.2017**
(21) Application number: 12167103.6
(22) Date of filing: 08.05.2012
(51) Int. Cl.: H01H 47/32

(54) **Electronic magnetic contactor**
Elektronischer magnetischer Schütz
Contacteur magnétique électronique

(30) Priority: 20.07.2011 KR 20110071782
(43) Date of publication of application: 23.01.2013
(73) Proprietor: LSIS Co., Ltd., Dongan-gu, Anyang-si Gyeonggi-do 431-080 (KR)
(72) Inventor: Choi, Jae Hyuk, 363-782 CHUNGBUK (KR)
(74) Representative: Groth & Co. KB

(56) References cited:
- US-A1- 2006 061 920
- US-A1- 2008 218 928

## Description

### BACKGROUND OF THE DISCLOSURE

### 1. Field of the Disclosure

The present disclosure relates to an electronic magnetic contactor, and more particularly to an electronic magnetic contactor having an operation state input.

### 2. Discussion of the Related Art

This section provides background information related to the present disclosure which is not necessarily prior art.

Generally, an electronic magnetic contactor, as one of constituent parts forming a factory automation system, serves to supply a power to a load or interrupt the power to the load, and to prevent a motor load from being burnt. The electronic magnetic contactor includes electronic elements including a thermal relay and an electronic magnetic switch, and a frame for assembling the electronic elements in one package. Furthermore, the electronic magnetic contactor functions to supply a power to a load or interrupt the power to the load in response to magnetization of an electromagnetic coil that is one of constituent parts of a switch.

In order to activate the electronic magnetic contactor, an inrush current is initially applied to an electromagnetic coil to activate a moving coil. In a case the moving coil is contacted to a fixed core, and even if a very weak holding current over the inrush current is applied to the electromagnetic coil, an electronic control is performed inside to maintain an operation state.

However, there may occur a problem of generating an inrush failure due to a capacity deficiency phenomenon of an operation power at the contactor at a time when the inrush current is applied to the electromagnetic coil of the electron magnetic contactor, voltage fluctuation by a starting load, drop in instantaneous voltage due to lightning or input of an excessive voltage. This problem is caused by supply of an input signal by sensing only amplitude of an input voltage at an electronic control device, which can cause a tremendous damage to the automation system. The conventional electronic magnetic contactor however cannot solve the problem because only an electromagnetic coil (60) is installed therein.

US 2006/0061920 discloses a low arc AC contactor comprising an on/off mechanism electromagnetic-controlled contact, a pulse power source generating circuit, a low arc trigger generating circuit, and a multifunctional fault-detecting circuit. The contactor converts an instantaneous strong current into strong pulse magnetic field energy to actuate contacts of mechanical portion of the contactor, so that the power source load is on or off. Each of the actuating process will be controlled by the electric circuit to perform at the lowest potential of AC voltage for reducing arc's destructive power. Moreover, the contactor uses photoelectric coupling circuits, in which it can be controlled by external low voltage signal commands, as well as providing protection from overload, phase loss, short circuit, and leakage current.

US 2008/0218928 discloses a coil-driving apparatus of an electro magnetic contactor is disclosed, which replaces the main units in an analog scheme with those in a digital scheme using a PWM controller of low power consumption to reduce the number of the analog components, minimize power consumption, and controls a constant voltage that flows on the coil by receiving the feedback current flowing on the coil, whereby error and defect generation rates are reduced, and deterioration and burning of components are prevented.

It is, therefore, desirable to overcome the above problems and others by providing an improved electronic magnetic contactor.

### SUMMARY OF THE DISCLOSURE

This section provides a general summary of the disclosure, and is not a comprehensive disclosure of its full scope or all of its features.

The present disclosure is directed to cope with the abovementioned problems/disadvantages and it is an object of the present disclosure to provide an electronic magnetic contactor configured to re-input a power by receiving a state of the electronic magnetic contactor.

Another object of the present disclosure is to provide an electronic magnetic contactor configured to minimize a potential loss that may occur at a factory management system by re-inputting a power, even if a discharge phenomenon occurs due to an external shock at a field site where vibration is severe. Technical problems to be solved by the present disclosure are not restricted to the above-mentioned description, and any other technical problems not mentioned so far will be clearly appreciated from the following description by the skilled in the art.

In a general aspect of the present disclosure, there is provided an electronic magnetic contactor, the contactor comprising: an operation power supply unit inputting an operation power; an electronic switch driving unit configured to receive a power from an operation power supply unit to drive a power supply of a load; a switching unit configured to be switched by a pulse signal to drive the electronic switch driving unit; an operation state determination unit configured to determine whether the electronic magnetic contactor is in an opened state or in a closed state; an input voltage sensing unit configured to sense an amplitude of an input voltage supplied from the operation power supply unit; and an input signal generation unit generating an input signal for determining whether the electronic magnetic contactor is inputted based on a determination result determined by the operation state determination unit and a sensing result sensed by the input voltage sensing unit configured to generate an input signal for determining whether the electronic magnetic contactor is inputted based on the determined state by the operation state determination unit and the sensed amplitude by the input voltage sensing unit, wherein the input signal generation unit is adapted to include an OR gate adapted to determine whether at least one high output is outputted based on the determined state by the operation state determination unit and the sensed amplitude by the input voltage sensing unit; and a comparator adapted to generate an input signal for determining whether the electronic magnetic contactor is inputted based on an output of the OR gate.

Preferably, but not necessarily, the operation state determination unit includes a comparator outputting a high output in a case the electronic magnetic contactor is in an open state and outputting a low output in a case the electronic magnetic contactor is in a closed state.

Preferably, but not necessarily, the input voltage sensing unit compares amplitude of the input voltage supplied by the operation power supply unit with amplitude of a reference voltage to output a high output in a case the amplitude of the input voltage is greater than the amplitude of the reference voltage, and output a low output in a case the amplitude of the input voltage is smaller than the amplitude of the reference voltage.

Preferably, but not necessarily, the input signal generation unit is adapted to generate an input signal instructing an input of the electronic magnetic contactor in a case at least a result of one high output is outputted in response to the determination result determined by the operation state determination unit and the sensing result sensed by the input voltage sensing unit.

Preferably, but not necessarily, the operation power supply unit is adapted to include a surge absorption unit absorbing a transient voltage, a noise filter circuit unit removing noise from an output power of the surge absorption unit, and a rectifying current circuit unit rectifying an output power from a noise filter and supplying the rectified power DC power to the switching unit.

Preferably, but not necessarily, the electronic magnetic contactor further comprises: an electromagnetic coil interposed between the operation power supply unit and the switching unit to be driven by switching of the switching unit; and a discharge circuit unit connected to the electromagnetic coil in parallel to allow a power condensed in the electromagnetic coil to continuously flow, in a case the switching unit is turned off.

Preferably, but not necessarily, the switching unit is adapted to include a pulse width modulation unit generating a pulse signal, in a case a power is supplied to a load, and a current sensing circuit unit detecting a current flowing to the switching unit and outputting the detected current to the pulse width modulation unit, wherein the pulse width modulation unit varies a width of the pulse signal in response to the pulse signal of the current sensing circuit unit.

The electronic magnetic contactor thus configured according to the present disclosure has an advantageous effect in that a power can be re-inputted by receiving a state of the electronic magnetic contactor, whereby a potential loss that may occur at a factory management system can be minimized by re-inputting the power, even if a discharge phenomenon occurs due to an external shock at a field site where vibration is severe.

### BRIEF DESCRIPTION OF THE DRAWINGS

The accompanying drawings, which are included to provide a further understanding of the present disclosure and are incorporated in the present disclosure and constitute a part of this application, and together with the description, serve to explain the principle of the disclosure. In the drawings:
FIG.1 is a schematic block diagram illustrating a configuration of an electronic magnetic contactor according to prior art;
FIG.2 is a schematic block diagram illustrating a configuration of an electronic magnetic contactor according to an exemplary embodiment of the present disclosure;
FIG. 3 is a circuit diagram illustrating a configuration of an operation state determination unit (136) as a constituent part of an electronic magnetic contactor according to an exemplary embodiment of the present disclosure;
FIG.4a is a schematic block diagram illustrating operations of an input voltage sensing unit, an input signal generation unit and an operation state determination unit as configurations of an electronic magnetic contactor according to an exemplary embodiment of the present disclosure;
FIG.4b is a schematic view illustrating a circuit configuration of FIG.4a; and
FIG.5 is a schematic view illustrating an entire operation of an electronic magnetic contactor according to an exemplary embodiment of the present disclosure.

### DETAILED DESCRIPTION

Advantages and features of the present invention may be understood more readily by reference to the following detailed description of exemplary embodiments and the accompanying drawings. Detailed descriptions of well-known functions, configurations or constructions are omitted for brevity and clarity so as not to obscure the description of the present disclosure with unnecessary detail. Thus, the present disclosure is not limited to the exemplary embodiments which will be described below, but may be implemented in other forms. In the drawings, the width, length, thickness, etc. of components may be exaggerated or reduced for the sake of convenience. Furthermore, throughout the descriptions, the same reference numerals will be assigned to the same elements in the explanations of the figures, and explanations that duplicate one another will be omitted.

Accordingly, the meaning of specific terms or words used in the specification and claims should not be limited to the literal or commonly employed sense, but should be construed or may be different in accordance with the intention of a user or an operator and customary usages. Therefore, the definition of the specific terms or words should be based on the contents across the specification. The terms "a" and "an" herein do not denote a limitation of quantity, but rather denote the presence of at least one of the referenced item.

As may be used herein, the terms "substantially" and "approximately" provide an industry-accepted tolerance for its corresponding term and/or relativity between items. Such an industry-accepted tolerance ranges from less than one percent to ten percent and corresponds to, but is not limited to, component values, angles, et cetera.

Now, an electronic magnetic contactor according to exemplary embodiments of the present disclosure will be described in detail with reference to accompanying drawings.

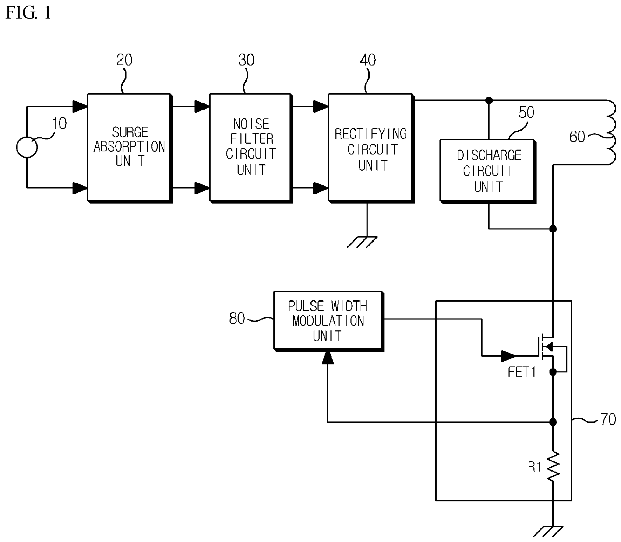

FIG.1 is a schematic block diagram illustrating a configuration of an electronic magnetic contactor according to prior art.

A conventional electronic magnetic contactor includes a surge absorption unit (20), a noise filter circuit unit (30), a rectifying circuit unit (40), a discharge circuit unit (50), an electromagnetic coil (60), a switching unit (70) and a pulse width modulation unit (80). Reference numeral 10 is an operation power. The operation power (10) may be an alternating current (AC) power or a direct current power. The surge absorption unit (20) removes a surge voltage included in the operation power (10) by absorption.

The noise filter circuit unit (30) removes noise included in the operation power removed of the surge voltage by the surge absorption unit (20). The rectifying circuit unit (40) serves to rectify the power outputted from the noise filter circuit unit (30) and convert the rectified power to DC power. The discharge circuit unit (50) and the electromagnetic coil (60) are connected in parallel, and a terminal at one side of the parallel connection is connected to an output terminal of the rectifying circuit unit (40).

The pulse width modulation unit (80) generates a switching signal using a pulse signal having a predetermined width. The switching unit (70) is such that a gate of a transistor (FET1) is connected to a ground resistor (R1) to detect a current flowing on an output terminal of the pulse width modulation unit (80) and the electromagnetic coil (60), and a drain of the transistor (FET1) is connected to the parallel connected electromagnetic coil (60) and a terminal of the other side of the discharge circuit unit (50).

The electronic magnetic contactor thus configured is such that the surge absorption unit (20) absorbs the surge voltage from the inputted operation power (10), the noise filter circuit unit (30) filters the noise and removes the noise and the rectifying circuit unit (40) rectifies the surge voltage-absorbed, noise-removed power and outputs in DC power. At this time, in a case the power inputted as the operation power (10) is a DC power, the rectifying circuit unit (40) may be dispensed with.

In a case the power is supplied under this state, the pulse width modulation unit (80) generates a pulse signal with a predetermined width, and the generated pulse signal is applied to the gate of the transistor (FET1). The transistor (FET1) repeats a conducted state and an interrupted state in response to the pulse signal outputted by the pulse width modulation unit (80).

In a case the transistor (FET1) is in a conducted state, the output power of the rectifying circuit unit (40) flows to the ground via the electromagnetic coil (60) and the transistor (FET1). In a case the transistor (FET1) is in an interrupted state, the output power condensed in the electromagnetic coil (60) flows through the discharge circuit unit (50). Thus, the electromagnetic coil (60) keeps the excited state, whereby the electronic switch of the electronic magnetic contactor keeps the closed state to allow the power to be supplied to the load.

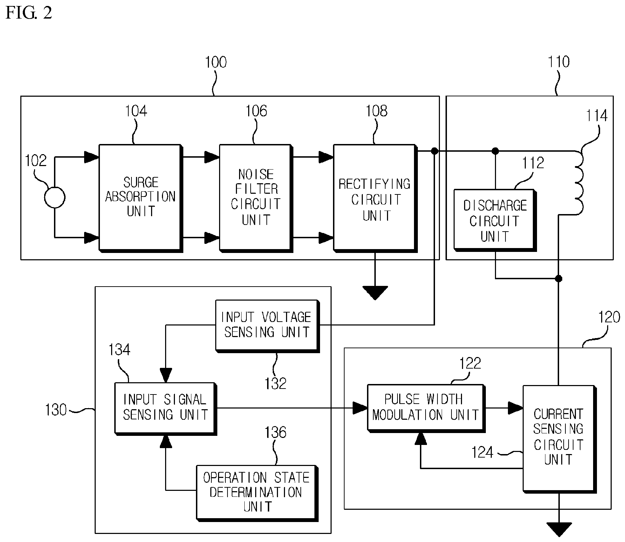

FIG.2 is a schematic block diagram illustrating a configuration of an electronic magnetic contactor according to an exemplary embodiment of the present disclosure.

Referring to FIG.2, the electronic magnetic contactor includes an operation power supply unit (100), an electronic switch driving unit (110), a switching unit (120) and an input determination unit (130).

The operation power supply unit (100) includes a surge absorption unit (104), a noise filter circuit unit (106) and a rectifying circuit unit (108). The electronic switch driving unit (110) includes a discharge circuit unit (112) and an electromagnetic coil (114), and the switching unit (120) includes a pulse width modulation unit (122), and a current sensing circuit unit (124). The input determination unit (130) includes an input voltage sensing unit (132), an input signal generation unit (134) and an operation state determination unit (136).

At this time, an operation power (102) may be a DC power or an AC power. The surge absorption unit (104) absorbs a surge voltage included in the operation power (102) and removes the surge voltage, and the noise filter circuit unit (106) removes noise included in the operation power removed of the surge voltage by the surge absorption unit (104).

The rectifying circuit unit (108) rectifies the power outputted by the noise filter circuit unit (106) and converts the power to a DC power.

The discharge circuit unit (112) and the electromagnetic coil (114) are connected in parallel, and one terminal of the parallel connection is connected to an output terminal of the rectifying circuit unit (108), and the other terminal of the parallel connection is connected to an input terminal of a current sensing circuit unit (124). The rectifying circuit unit (108) is configured to absorb counter electromotive force generated by the electromagnetic coil (114) while the operation power is turned off or the pulse width is modulated.

The pulse width modulation unit (122) generates a pulse signal having a predetermined width as a switching signal and receives a current flowing in the electromagnetic coil (114) detected by the current sensing circuit unit (124).

Meanwhile, the input voltage sensing unit (132) functions to sense amplitude of an input voltage, and the operation state determination unit (136) serves to determine an operation state of the electronic magnetic contactor. The input voltage sensed by the input voltage sensing unit (132), i.e., a sensing result of a voltage supplied by the operation power supply unit (100) and an operation state of the electronic magnetic contactor determined by the operation state determination unit (136), i.e., a result of whether the electronic magnetic contactor is in an open state or a closed state, are transmitted to the input signal generation unit (134).

The input signal generation unit (134) generates a signal for rendering the electronic magnetic contactor to be in an input state, and transmits the signal to the switching unit (120), where the switching unit (120) controls the electronic switch driving unit (110) and participates in the operation of the electronic magnetic contactor. An operation of the input determination unit (130), i.e., an operation related to the input voltage sensing unit (132), the input signal generation unit (134) and the operation state determination unit (136) will be described in detail in the following manner.

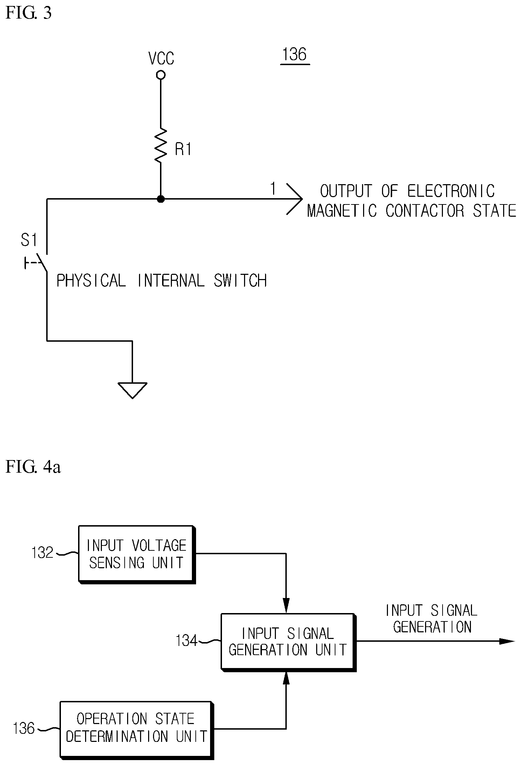

FIG. 3 is a circuit diagram illustrating a configuration of an operation state determination unit (136) as a constituent part of an electronic magnetic contactor according to an exemplary embodiment of the present disclosure.

Referring to FIG.3, the operation state determination unit (136) may include a physical internal switch (S1) and an internal resistor (R1). The physical internal switch (S1) operating in association with an OFF state and an ON state of the electronic magnetic contactor is connected to a minus (-) input of a comparator to have an H (1) input via the resistor (R1), in a case the physical internal switch (S1) is turned OFF, and to have a L (0) input via a ground, in a case the physical internal switch (S1) is turned ON.

A plus (+) input of the comparator is connected to a reference voltage, where the comparator compares the two inputs and sends an output, and has an H(1) output result, in a case the physical internal switch (S1) is turned OFF, and has a L(0) output result, in a case the physical internal switch (S1) is turned ON. Thus, a physical state of the electronic magnetic contactor can be checked, whereby an input signal can be generated by checking if the electronic magnetic contactor is turned OFF to make the electronic magnetic contactor in an ON state.

FIG.4a is a schematic block diagram illustrating operations of an input voltage sensing unit (132), an input signal generation unit (134) and an operation state determination unit (136) as configurations of an electronic magnetic contactor according to an exemplary embodiment of the present disclosure.

The input voltage sensing unit (132) includes a comparator and compares an input voltage rectified by the rectifying circuit unit (108) to a DC voltage with a reference voltage, and has an H (1) output result, in a case the input voltage is greater than the reference voltage, and has an L (0) output result, in a case the input voltage is smaller than the reference voltage.

Meanwhile, the operation state determination unit (136) includes the physical internal switch (S1) and the internal resistor (R1), and compares an input from the physical internal switch (S1) with the reference voltage, and outputs H (1), in a case the physical internal switch (S1) is OFF and outputs L (0), in a case the physical internal switch (S1) is ON.

The input signal generation unit (134) receives an output of the comparator of the input voltage sensing unit (132) and an output of the comparator of the operation state determination unit (136) respectively, and can prevent an erroneous operation by generating an input signal in a case at least one of the two outputs has an H (1) output result. To be more specific, in a case the input of the electronic magnetic contactor is determined only based on the input voltage, there is a chance of the input being realized in an improper manner in a case a discharge phenomenon is generated, and an erroneous operation caused by the discharge phenomenon generated by vibration or shock can be prevented.

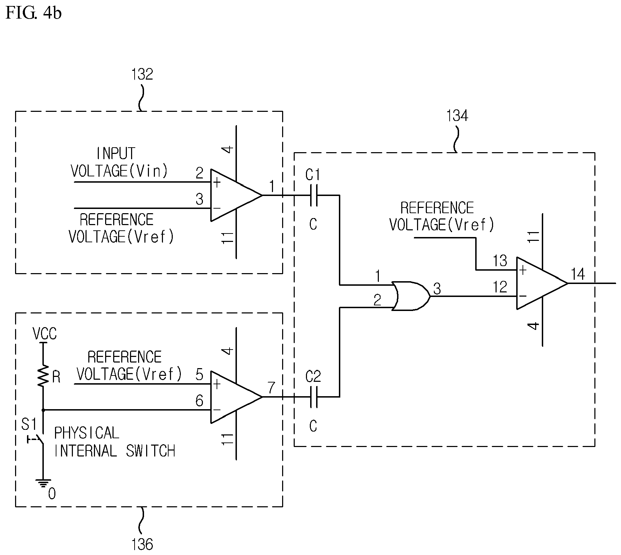

FIG.4b is a schematic view illustrating in detail a circuit configuration of FIG.4a.

The input voltage sensing unit (132) includes a comparator and has an input voltage (Vin) and a reference voltage (Vref). The input voltage (Vin) refers to a voltage supplied from the operation power supply unit (100), where the comparator has an H(1) output result, in a case the input voltage (Vin) is greater than the reference voltage (Vref), and has a L(0) output result, in a case the input voltage (Vin) is smaller than the reference voltage (Vref).

The operation state determination unit (136) includes a physical internal switch (S1), an internal resistor (R1) and a comparator, the detailed description of which will be omitted as it was explained in the foregoing of FIG.3 .

The input signal generation unit (134) includes two capacitors (C1, C2), an OR gate and a comparator. A comparator output of the input voltage sensing unit (132) and a comparator output of the operation state determination unit (136) are respectively connected to an input of the OR gate via the capacitors (C1, C2). The comparator output of the input voltage sensing unit (132) and the comparator output of the operation state determination unit (136) pass the capacitors (C1, C2), only when the comparator output of the input voltage sensing unit (132) and the comparator output of the operation state determination unit (136) are H(1) output results. A plus (+) input of the comparator of the input signal generation unit (134) is applied to an output terminal of the OR gate and a minus (-) input terminal of the comparator is applied to the reference voltage.

Even if the H(1) signal is generated by detecting the operation voltage of the input voltage sensing unit (132), and the electronic magnetic contactor is not in a close state, the physical internal switch (S1) detects the fact and provides the H(1) signal, such that the erroneous operation is not generated.

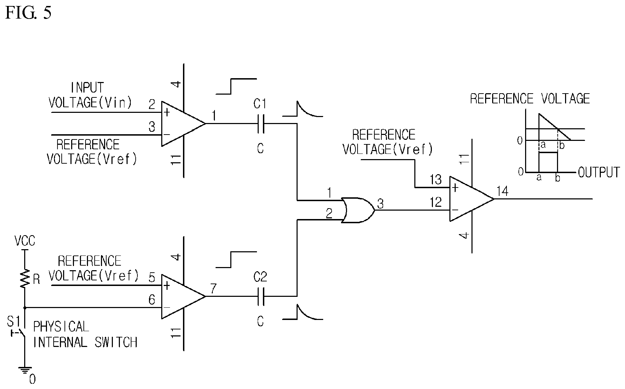

FIG.5 is a schematic view illustrating an entire operation of an electronic magnetic contactor according to an exemplary embodiment of the present disclosure.

A detailed operation of the input voltage sensing unit (132), the input signal generation unit (134) and the operation state determination unit (136) has been already described in the foregoing, such that no redundant explanation will be omitted. Thus, description will be centered on input signal and output signal of the input voltage sensing unit (132), the input signal generation unit (134) and the operation state determination unit (136).

The input signal generation unit (134) generates an output signal by using, by the comparator, a signal outputted through the OR gate using the H(1) output result of the input voltage sensing unit (132) and the H(1) output result of the operation state determination unit (136). At this time, the signal outputted through the comparator maintains a H(1) from a to b. Thus, even if the output of the operation state determination unit (136) is changed to the L(0), the H(1) can be kept.

As apparent from the foregoing, the electronic magnetic contactor according to the present disclosure has an industrial applicability in that a power can be re-inputted by receiving (feedback) a state of the electronic magnetic contactor, the re-input is enabled even if a discharge phenomenon is generated by an external shock at a field site where vibration is severe, whereby a potential loss that may be generated at the factory automation system can be minimized.

## Claims

1. An electronic magnetic contactor for determining whether an operation power is supplied, the contactor comprising:
an electronic switch driving unit (110) configured to receive a power from an operation power supply unit (100) to drive a power supply of a load;
a switching unit (120) configured to be switched by a pulse signal to drive the electronic switch driving unit (110);
an operation state determination unit (136) configured to determine whether the electronic magnetic contactor is in an opened state or in a closed state;
an input voltage sensing unit (132) configured to sense an amplitude of an input voltage supplied from the operation power supply unit (100); and
an input signal generation unit (134), **characterised in that**
the input signal generation unit (134) is configured to generate an input signal for determining whether the electronic magnetic contactor is inputted based on the determined state by the operation state determination unit (136) and the sensed amplitude by the input voltage sensing unit (132),
wherein the input signal generation unit (134) includes
an OR gate adapted to determine whether at least one high output is outputted based on the determined state by the operation state determination unit (134) and the sensed amplitude by the input voltage sensing unit (132); and
a comparator adapted to generate an input signal for determining whether the electronic magnetic contactor is inputted based on an output of the OR gate.

2. The electronic magnetic contactor according to claim 1, the operation state determination unit (136) being adapted to include a comparator outputting a high output in a case the electronic magnetic contactor is in the opened state and outputting a low output in a case the electronic magnetic contactor is in the closed state.

3. The electronic magnetic contactor according to claim 1 or 2, the input voltage sensing unit (132) being adapted to compare an amplitude of the input voltage supplied by the operation power supply unit (100) with an amplitude of a reference voltage to output a high output in a case the amplitude of the input voltage is greater than the amplitude of the reference voltage, and to output a low output in a case the amplitude of the input voltage is smaller than the amplitude of the reference voltage.

4. The electronic magnetic contactor according to claim 1, the input signal generation unit (134) being adapted to generate an input signal instructing an input of the electronic magnetic contactor in a case at least one high output is outputted in response to the determined state by the operation state determination unit (136) and the sensed amplitude by the input voltage sensing unit (132).

5. The electronic magnetic contactor according to any of claims 1 to 4, the operation power supply unit (100) being adapted to include a surge absorption unit (104) absorbing a transient voltage, a noise filter circuit unit (106) removing noise from an output of the surge absorption unit (104), and a rectifying circuit unit (108) rectifying an output from a noise filter and supplying the rectified DC power to the switching unit (120).

6. The electronic magnetic contactor according to any of claims 1 to 5, the electronic switch driving unit (110) further comprising: an electromagnetic coil (114) interposed between the operation power supply unit (100) and the switching unit (120) to be driven by switching of the switching unit; and a discharge circuit unit (112) connected to the electromagnetic coil in parallel to absorb counter electromotive force generated by the electromagnetic coil in a case the switching unit (120) is turned off.

7. The electronic magnetic contactor according to any of claims 1 to 6, the switching unit (120) being adapted to include a pulse width modulation unit (122) generating a pulse signal, in a case a power is supplied to the load, and a current sensing circuit unit (124) detecting a current flowing to the switching unit (120) and outputting the detected current to the pulse width modulation unit (122), wherein the pulse width modulation unit (122) varies a width of the pulse signal in response to the output of the current sensing circuit unit (124).

## Patentansprüche

1. Elektronischer magnetischer Kontaktgeber zum Bestimmen, ob Betriebsleistung zugeführt wird, wobei der Kontaktgeber Folgendes umfasst:
eine elektronische Schaltansteuerungseinheit (110), die konfiguriert ist, Leistung von einer Betriebsleistungs-Versorgungseinheit (100) zu empfangen, um eine Leistungsversorgung einer Last anzusteuern;
eine Schalteinheit (120), die konfiguriert ist, durch ein Impulssignal geschaltet zu werden, um die elektronische Schaltansteuerungseinheit (110) anzusteuern;
eine Betriebszustand-Bestimmungseinheit (136), die konfiguriert ist, zu bestimmen, ob der elektronische magnetische Kontaktgeber in einem geöffneten Zustand oder in einem geschlossenen Zustand ist;
eine Eingangsspannungs-Erfassungseinheit (132), die konfiguriert ist, eine Amplitude einer Eingangsspannung, die von der Betriebsleistungs-Versorgungseinheit (100) geliefert wird, zu erfassen; und
eine Eingangssignal-Erzeugungseinheit (134),
**dadurch gekennzeichnet, dass**
die Eingangssignal-Erzeugungseinheit (134) konfiguriert ist, ein Eingangssignal zu erzeugen, um anhand des durch die Betriebszustands-Bestimmungseinheit (136) bestimmten Zustands und der durch die Eingangsspannungs-Erfassungseinheit (132) erfassten Amplitude zu bestimmen, ob eine Eingabe in den elektronischen magnetischen Kontaktgeber erfolgt,
wobei die Eingangssignal-Erzeugungseinheit (134) Folgendes umfasst:
ein ODER-Gatter, das dafür ausgelegt ist, anhand des durch die Betriebszustands-Bestimmungseinheit (134) bestimmten Zustands und der durch die Eingangsspannungs-Erfassungseinheit (132) erfassten Amplitude zu bestimmen, ob wenigstens ein hohes Ausgangssignal ausgegeben wird; und
einen Komparator, der dafür ausgelegt ist, anhand eines Ausgangssignals des ODER-Gatters ein Eingangssignal zu erzeugen, um zu bestimmen, ob eine Eingabe in den elektronischen magnetischen Kontaktgeber erfolgt.

2. Elektronischer magnetischer Kontaktgeber nach Anspruch 1, wobei die Betriebszustand-Bestimmungseinheit (136) so beschaffen ist, dass sie einen Komparator enthält, der ein hohes Ausgangssignal dann ausgibt, wenn der elektronische magnetische Kontaktgeber in dem offenen Zustand ist, und ein niedriges Ausgangssignal dann ausgibt, wenn der elektronische magnetische Kontaktgeber in dem geschlossenen Zustand ist.

3. Elektronischer magnetischer Kontaktgeber nach Anspruch 1, wobei die Eingangsspannungs-Erfassungseinheit (132) dafür ausgelegt ist, eine Amplitude der Eingangsspannung, die von der Betriebsleistungs-Versorgungseinheit (100) geliefert wird, mit einer Amplitude einer Referenzspannung zu vergleichen, um ein hohes Ausgangssignal dann auszugeben, wenn die Amplitude der Eingangsspannung größer als die Amplitude der Referenzspannung ist, und ein niedriges Ausgangssignal dann auszugeben, wenn die Amplitude der Eingangsspannung kleiner als die Amplitude der Referenzspannung ist.

4. Elektronischer magnetischer Kontaktgeber nach Anspruch 1, wobei die Eingangssignal-Erzeugungseinheit (134) dafür ausgelegt ist, ein Eingangssignal zu erzeugen, das eine Eingabe in den elektronischen magnetischen Kontaktgeber anweist, falls in Reaktion auf den durch die Betriebszustand-Bestimmungseinheit (130) bestimmten Zustand und die durch die Eingangsspannungs-Erfassungseinheit (132) erfasste Amplitude wenigstens ein hohes Ausgangssignal ausgegeben wird.

5. Elektronischer magnetischer Kontaktgeber nach einem der Ansprüche 1 bis 4, wobei die Betriebsleistungs-Versorgungseinheit (100) so beschaffen ist, dass sie eine Stoßabsorptionseinheit (104), die eine Stoßspannung absorbiert, eine Rauschfilterschaltungseinheit (106), die aus einem Ausgangssignal der Stoßabsorptionseinheit (104) Rauschen entfernt, und eine Gleichrichterschaltungseinheit (108), die ein Ausgangssignal von einem Rauschfilter gleichrichtet und die gleichgerichtete Gleichspannungsleistung der Schalteinheit (120) zuführt, umfasst.

6. Elektronischer magnetischer Kontaktgeber nach einem der Ansprüche 1 bis 5, wobei die elektronische Schaltansteuerungseinheit (110) ferner Folgendes umfasst: eine elektromagnetische Spule (114), die zwischen die Betriebsleistungs-Versorgungseinheit (100) und die Schalteinheit (120) geschaltet ist, um durch Schalten der Schalteinheit angesteuert zu werden; und eine Entladeschaltungseinheit (112), die zu der elektromagnetischen Spule parallel geschaltet ist, um eine elektromotorische Gegenkraft, die durch die elektromagnetische Spule dann erzeugt wird, wenn die Schalteinheit (120) ausgeschaltet ist, zu absorbieren.

7. Elektronischer magnetischer Kontaktgeber nach einem der Ansprüche 1 bis 6, wobei die Schalteinheit (120) so beschaffen ist, dass sie eine Impulsbreitenmodulationseinheit (122), die ein Impulssignal erzeugt, wenn der Last Leistung zugeführt wird, und eine Stromerfassungs-Schaltungseinheit (124), die einen durch die Schalteinheit (120) fließenden Strom detektiert und den detektierten Strom an die Pulsbreitenmodulationseinheit (122 ausgibt, umfasst, wobei die Impulsbreitenmodulationseinheit (122) die Breite des Impulssignals in Reaktion auf das Ausgangssignal der Stromerfassungs-Schaltungseinheit (124) variiert.

## Revendications

1. Contacteur magnétique électronique pour déterminer qu'une puissance de fonctionnement est fournie ou non, le contacteur comprenant :
une unité de commande de commutateur électronique (110) configurée pour recevoir une puissance depuis une unité d'alimentation électrique de fonctionnement (100) pour commander une alimentation électrique d'une charge ;
une unité de commutation (120) configurée pour être commutée par un signal d'impulsion pour commander l'unité de commande de commutateur électronique (110) ;
une unité de détermination d'état de fonctionnement (136) configurée pour déterminer que le contacteur magnétique électronique est dans un état ouvert ou dans un état fermé ;
une unité de détection de tension d'entrée (132) configurée pour détecter une amplitude d'une tension d'entrée fournie par l'unité d'alimentation électrique de fonctionnement (100)
; et
une unité de génération de signal d'entrée (134),
**caractérisé en ce que**
l'unité de génération de signal d'entrée (134) est configurée pour générer un signal d'entrée pour déterminer que une entrée du contacteur magnétique électronique en fonction de l'état déterminé par l'unité de détermination d'état de fonctionnement (136) et de l'amplitude détectée par l'unité de détection de tension d'entrée (132),
dans lequel l'unité de génération de signal d'entrée (134) comporte
une porte OU adaptée pour déterminer qu'au moins une sortie haute est produite en sortie en fonction de l'état déterminé par l'unité de détermination d'état de fonctionnement (134) et de l'amplitude détectée par l'unité de détection de tension d'entrée (132) ; et
un comparateur adapté pour générer un signal d'entrée pour déterminer une entrée ou non du contacteur magnétique électronique en fonction d'une sortie de la porte OU.

2. Contacteur magnétique électronique selon la revendication 1, l'unité de détermination d'état de fonctionnement (136) étant adaptée pour inclure un comparateur produisant en sortie une sortie haute quand le contacteur magnétique électronique est dans l'état ouvert et produisant en sortie une sortie basse quand le contacteur magnétique électronique est dans l'état fermé.

3. Contacteur magnétique électronique selon la revendication 1 ou 2, l'unité de détection de tension d'entrée (132) étant adaptée pour comparer une amplitude de la tension d'entrée fournie par l'unité d'alimentation électrique de fonctionnement (100) à une amplitude d'une tension de référence pour produire en sortie une sortie haute quand l'amplitude de la tension d'entrée est supérieure à l'amplitude de la tension de référence, et produire en sortie une sortie basse quand l'amplitude de la tension d'entrée est inférieure à l'amplitude de la tension de référence.

4. Contacteur magnétique électronique selon la revendication 1, l'unité de génération de signal d'entrée (134) étant adaptée pour générer un signal d'entrée instruisant une entrée du contacteur magnétique électronique quand au moins une sortie haute est produite en sortie en réponse à l'état déterminé par l'unité de détermination d'état de fonctionnement (136) et à l'amplitude détectée par l'unité de détection de tension d'entrée (132).

5. Contacteur magnétique électronique selon l'une quelconque des revendications 1 à 4, l'unité d'alimentation électrique de fonctionnement (100) étant adaptée pour inclure une unité d'absorption de surintensité (104) absorbant une tension transitoire, une unité de circuit de filtre de bruit (106) supprimant le bruit d'une sortie de l'unité d'absorption de surintensité (104), et une unité de circuit de redressement (108) redressant une sortie d'un filtre de bruit et fournissant la puissance C.C. redressée à l'unité de commutation (120).

6. Contacteur magnétique électronique selon l'une quelconque des revendications 1 à 5, l'unité de commande de commutateur électronique (110) comprenant en outre : une bobine électromagnétique (114) interposée entre l'unité d'alimentation électrique de fonctionnement (100) et l'unité de commutation (120) à commander par commutation de l'unité de commutation ; une unité de circuit de décharge (112) connectée à la bobine électromagnétique en parallèle pour absorber la force contre-électromotrice générée par la bobine électromagnétique quand l'unité de commutation (120) est arrêtée.

7. Contacteur magnétique électronique selon l'une quelconque des revendications 1 à 6, l'unité de commutation (129) étant adaptée pour inclure une unité de modulation de largeur d'impulsion (122) qui génère un signal d'impulsion, quand une puissance est fournie à la charge, et une unité de circuit de détection de courant (124) qui détectent un courant passant à l'unité de commutation (120) et produit en sortie le courant détecté à l'unité de modulation de largeur d'impulsion (122), dans lequel l'unité de modulation de largeur d'impulsion (122) fait varier une largeur du signal d'impulsion en réponse à la sortie de l'unité de circuit de détection de courant (124).
